(19) **Europäisches Patentamt European Patent Office Office européen des brevets**

(11) **EP 3 835 083 B1**

(12) **EUROPEAN PATENT SPECIFICATION**

(45) Date of publication and mention
of the grant of the patent:
**07.06.2023 Bulletin 2023/23**

(21) Application number: **20212572.0**

(22) Date of filing: **08.12.2020**

(51) International Patent Classification (IPC):
**B60C 7/18** (2006.01)          **B60C 9/18** (2006.01)
**B60C 7/22** (2006.01)

(52) Cooperative Patent Classification (CPC):
**B60C 7/18; B60C 7/22; B60C 9/1807**

(54) **SHEAR BELT PACKAGE FOR A TIRE AND METHOD OF MANUFACTURING**

SCHERGURTPAKET FÜR REIFEN UND VERFAHREN ZUR HERSTELLUNG

NAPPE D'ARMATURE DE CISAILLEMENT POUR UN PNEUMATIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2019 US 201916708994**

(43) Date of publication of application:
**16.06.2021 Bulletin 2021/24**

(73) Proprietor: **The Goodyear Tire & Rubber Company Akron, OH 44316 (US)**

(72) Inventors:
• **BHUIYAN, Md Atiqur Rahman**
  **Copley, OH 44321 (US)**
• **RICHARDS, Jimmy Lee**
  **Rootstown, OH 44272 (US)**
• **BOND, Gregory Monroe**
  **Akron, OH 44312 (US)**
• **ESTAFEN, Christopher Edward**
  **Bedford, OH 44146 (US)**
• **SPORTELLI, Francesco**
  **3249 Bettembourg (LU)**
• **BOROWCZAK, Marc**
  **Hartville, OH 44632 (US)**

(74) Representative: **Kutsch, Bernd**
**Goodyear S.A.**
**Patent Department**
**Avenue Gordon Smith**
**7750 Colmar-Berg (LU)**

(56) References cited:
**EP-A1- 2 910 388          EP-A1- 3 196 048**
**EP-A1- 3 238 957          EP-A1- 3 323 635**
**US-A1- 2010 018 621**

## Description

Field of the Invention

The present invention provides an improved shear belt package for use in non-pneumatic tires or in pneumatic tires. The shear belt package may however also be used in other applications such as conveyor belts.

Background of the Invention

One conventional example relates to a structurally supported resilient tire supporting a load without internal air pressure. This non-pneumatic tire includes a ground contacting portion and side wall portions that extend radially inward from the tread portion and anchor in bead portions adapted to remain secure to a wheel during rolling of the wheel/tire. A reinforced annular shear band is disposed radially inward of the tread portion. This shear band includes at least one shear layer, a first membrane adhered to the radially inward extent of the shear layer and a second membrane adhered to the radially outward extent of the shear layer. Each of the membranes has a longitudinal tensile modulus sufficiently greater than the dynamic shear modulus of the shear layer so that, when under load, the ground contacting portion of the tire deforms to a flat contact region through shear strain in the shear layer while maintaining constant length of the membranes. Relative displacement of the membranes occurs substantially by shear strain in the shear layer.

Another conventional non-pneumatic tire includes an outer annular shear band and a plurality of web spokes that extend transversely across and radially inward from the shear band and are anchored in a wheel or hub. The shear band may comprise an annular shear layer, a first membrane adhered to the radially inward extent of the shear layer, and a second membrane adhered to the radially outward extent of the shear layer. Under load, this shear band deforms in the contact area with the ground surface through a mechanism that includes shear deformation of the shear band.

As described above, a shear band may provide desirable performance benefits in a tire. As described below, the shear belt package in accordance with the present invention enhances performance capabilities of the tire. The improved construction for the shear belt package has applications in pneumatic tires, nonpneumatic tires, and other products as well.

EP 3 238 957 A1 discloses a shear belt structure in accordance with the preamble of claim 1.

Summary of the Invention

The invention relates to a shear belt package in accordance with claim 1, to a tire in accordance with claim 9 and to a method in accordance with claim 12.

Dependent claims refer to preferred embodiments of the invention.

A shear belt package for a tire includes a first belt layer extending circumferentially around the tire, a second belt layer extending circumferentially around the tire, and a shear band coupon or shear band structure radially interposed between the first belt layer and the second belt layer. The shear band coupon includes a first reinforcing ply radially adjacent the first belt layer, a third reinforcing ply radially adjacent the second belt layer, and a second reinforcing ply radially interposed between the first reinforcing ply and the second reinforcing ply. The first reinforcing ply includes a first three dimensional layer enclosed by a first fabric layer. The second reinforcing ply includes a second three dimensional layer enclosed by a second fabric layer. The third reinforcing ply includes a third three dimensional layer enclosed by a third fabric layer. A further fabric layer encloses all of the three dimensional layers.

According to a preferred aspect of the shear belt package, the first three dimensional layer includes a structure angled between -45 degrees and -35 degrees relative to the equatorial plane of the tire.

According to a preferred aspect of the shear belt package, the second three dimensional layer includes a structure angled between -5 degrees and +5 degrees relative to the equatorial plane of the tire.

According to a preferred aspect of the shear belt package, the third three dimensional layer includes a structure angled between +35 degrees and +45 degrees relative to the equatorial plane of the tire.

According to a preferred aspect of the shear belt package, the first fabric layer includes cords angled between +35 degrees and +45 degrees relative to the equatorial plane of the tire.

According to a preferred aspect of the shear belt package, the second fabric layer includes cords angled between -5 degrees and +5 degrees relative to the equatorial plane of the tire.

According to a preferred aspect of the shear belt package, the third fabric layer includes cords angled between -45 degrees and -35 degrees relative to the equatorial plane of the tire.

According to a preferred aspect of the shear belt package, the first belt layer includes metal cords angled between +35 degrees and +45 degrees relative to the equatorial plane of the tire.

According to a preferred aspect of the shear belt package, the second belt layer includes metal cords angled between +35 degrees and +45 degrees relative to the equatorial plane of the tire.

According to a preferred aspect of the shear belt package, the first belt layer and the second belt layer both include metal cords angled between -5 degrees and +5 degrees relative to the equatorial plane of the tire.

The disclosed method constructs a shear belt package that may be used with a tire. The method includes the steps of: enclosing spacer layers with angled fabric layers; orienting the spacer layers and angled fabric layers relative to an equatorial plane, for instance an equatorial plane of a tire; enclosing all of the spacer layers with an overall angled fabric layer to form a shear band coupon or shear belt structure; orienting the shear band coupon radially between a first belt layer and a second belt layer; and curing the first belt layer, the shear band coupon, and the second belt layer to form a complete belt package.

According to a preferred aspect of the method, a step includes angling a first spacer layer of the shear band coupon between -45 degrees and -35 degrees relative to the equatorial plane.

According to a preferred aspect of the method, a step includes angling a second spacer layer of the shear band coupon between -5 degrees and +5 degrees relative to the equatorial plane.

According to a preferred aspect of the method, a step includes angling a third spacer layer of the shear band coupon between +35 degrees and +45 degrees relative to the equatorial plane.

According to a preferred aspect of the method, a step includes positioning a first fabric layer of the shear band coupon with cords angled between +35 degrees and +45 degrees relative to the equatorial plane.

According to a preferred aspect of the method, a step includes positioning a second fabric layer of the shear band coupon with cords angled between -5 degrees and +5 degrees relative to the equatorial plane.

According to a preferred aspect of the method, a step includes positioning a third fabric layer of the shear band coupon with cords angled between -45 degrees and -35 degrees relative to the equatorial plane.

According to a preferred aspect of the method, a step includes angling cords of the first belt layer between -5 degrees and +5 degrees relative to the equatorial plane.

According to a preferred aspect of the method, a step includes angling cords of the second belt layer between -5 degrees and +5 degrees relative to the equatorial plane.

According to a preferred aspect of the method, a step includes angling reinforcing cords of both the first belt layer and the second belt layer between -5 degrees and +5 degrees relative to the equatorial plane.

Definitions

As used herein and in the claims:

"Annular" means formed like a ring.
"Aramid" and "Aromatic polyamide" both mean a manufactured fiber in which the fiber-forming substance is generally recognized as a long chain of synthetic aromatic polyamide in which at least 85% of the amide linkages are attached directly to the two aromatic rings. Representative of an aramid or aromatic polyamide is a poly (p- phenyleneterephthalamide).
"Axial" and "axially" refer to lines or directions that are parallel to the axis of rotation of the tire.
"Circumferential" and "circumferentially" mean lines or directions extending along the perimeter of the surface of the annular tire parallel to the equatorial plane (EP) and perpendicular to the axial direction.
"Cord" means one of the reinforcement strands which the reinforcement structures of the tire are comprise.
"Cord angle" means the acute angle, left or right in a plan view of the tire, formed by a cord with respect to the equatorial plane (EP). The "cord angle" is measured in a cured but uninflated tire.
"Cord twist" means each yarn of the cord has its component filaments twisted together a given number of turns per unit of length of the yarn (usually expressed in turns per inch (TPI) or turns per meter (TPM)) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist
"Denier" means the weight in grams per 9000 meters (unit for expressing linear density). "Dtex" means the weight in grams per 10,000 meters.
"Dynamic shear modulus" means the shear modulus measured per ASTM D5992.
"Elongation at break" means the tensile elongation as measured by ASTM D412-98a and conducted at 100°C.
"Equatorial plane (EP)" means the plane perpendicular to the tire's axis of rotation and passing through the center of its tread; or the plane containing the circumferential centerline of the tread.
"Fabric" means a network of preferably unidirectionally extending cords, which may be twisted, and which in turn are composed of a plurality of a multiplicity of filaments (which may also be twisted) of a preferably relatively high modulus material.
"Fiber" is a unit of matter, either natural or man-made, that forms the basic element of filaments; characterized by having a length at least 100 times its diameter or width.
"Filament count" means the number of filaments that make up a yarn. Example: 1000 denier polyester has approximately 190 filaments.

"High tensile steel (HT)" means a carbon steel with a tensile strength of at least 3400 MPa at 0.20 mm filament diameter.

"Hysteresis" means a dynamic loss tangent (e.g., max tan delta). The dynamic characteristics of the materials are measured on an MTS 831 Elastomer Test System in accordance with ASTM D5992. The response of a sample of vulcanized material (cylindrical test piece of a thickness of 4 mm and a section of 400 mm$^2$), subjected to an alternating single sinusoidal shearing stress, at a frequency of 10 Hz and at 80°C, is recorded. Scanning is conducted at an amplitude of deformation of 0.1 percent to 50 percent (outward cycle), then of 50 percent to 0.1 percent (return cycle). The maximum shear modulus G max in MPa and the maximum value of the tangent of the loss angle tan delta (max tan delta) is determined during the outward cycle.

"Inner" means toward the inside of the tire and "outer" means toward its exterior.

"LASE" is load at specified elongation.

"Lateral" means an axial direction.

"Modulus" of a test specimen means the tensile modulus of elasticity at 1 percent elongation in the circumferential direction of the tire multiplied by the effective thickness of the test specimen.

"Mega tensile steel (MT)" means a carbon steel with a tensile strength of at least 4500 MPa at 0.20 mm filament diameter.

"Normal tensile steel (NT)" means a carbon steel with a tensile strength of at least 2800 MPa at 0.20 mm filament diameter.

"Radial" and "radially" mean directions radially toward or away from the axis of rotation of the tire.

"Spring rate" means the stiffness of tire expressed as the slope of the load deflection curve at a given pressure.

"Stiffness ratio" means the value of a control belt structure stiffness divided by the value of another belt structure stiffness when the values are determined by a fixed three point bending test having both ends of the cord supported and flexed by a load centered between the fixed ends.

"Super tensile steel (ST)" means a carbon steel with a tensile strength of at least 3650 MPa at 0.20 mm filament diameter.

"Tenacity" means stress expressed as force per unit linear density of the unstrained specimen (gm/tex or gm/denier).

"Tensile stress" is force expressed in force/cross-sectional area. Strength in psi=12,800 times specific gravity times tenacity in grams per denier.

"Tension" for a cord means force on the cord expressed as mN/tex.

"Turns per inch", or TPI, means turns of cord twist for each inch length of cord.

"Ultra tensile steel (UT)" means a carbon steel with a tensile strength of at least 4000 MPa at 0.20 mm filament diameter.

"Yarn" is a generic term for a continuous strand of fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

Brief Description of the Drawings

A full and enabling disclosure, directed to one of ordinary skill in the art, is set forth in the specification with reference to the appended Figures, in which:

FIG. 1 is a cross section view of an example wheel and tire for use with the present invention.
FIG. 2 is a schematic diagram illustrating the ground reaction forces for one example homogeneous shear band.
FIG. 3 is a schematic diagram illustrating the ground reaction forces for an example multilayer shear band.
FIG. 4 is a cross section view of an example composite shear band.
FIG. 5 is a cross section view of another example composite shear band.
FIG. 6 is a cross section view of still another example composite shear band.
FIG. 7 is a cross section view of an embodiment of a shear belt package in accordance with the present invention.
FIG. 8 is schematic view taken along line '8-8' in FIG. 7 of the layers of the example shear belt package in accordance with the present invention.

Similar numerals refer to similar parts throughout the drawings.

Detailed Description of Example Embodiments of the Present Invention

Reference will now be made in detail to examples, one or more examples of which are illustrated in the Figures. Each example is provided by way of explanation, and not meant as a limitation of the present invention. For example, features illustrated or described as part of one example may be used with another example to yield still a third example. It is intended that the present invention include these and other modifications and variations. It should be noted that for the purposes of discussion, only half of the example tires may be depicted in one or more of the figures. One of ordinary skill in the art, using the teachings disclosed herein, will understand that the same or substantially similar features may be repeated on both sides of the example tires.

The present invention provides an improved shear belt package that may be used in a variety of products including, for example, non-pneumatic tires, pneumatic tires, and/or other technologies. The improved shear belt package is constructed as a composite comprising individual layers, which are, in turn, constructed from certain materials having specific physical properties that, when combined in a particular manner as described herein, provide overall physical properties and performance characteristics desirably exceeding that which would be obtained from a shear belt package constructed from only one of the individual materials. By way of example only, improvements in rolling resistance and tire design flexibility may be obtained.

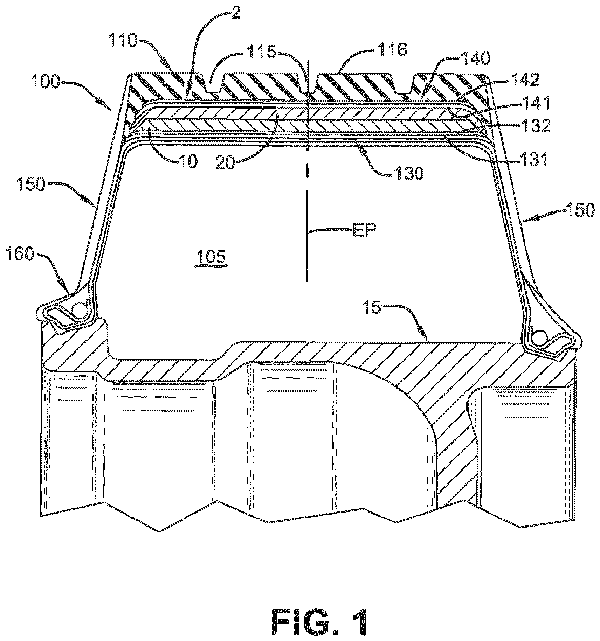

Accordingly, by way of example, an example structurally supported resilient tire 100 for use with the present invention is shown in FIG. 1. The tire 100 has a ground contacting tread portion 110, two sidewall portions 150 extending radially inward from the tread portion 110, and bead portions 160 at radially inner ends of the sidewall portions 150. The bead portions 160 anchor the tire 100 to a wheel 15. The tread portion 110, sidewall portions 150, and bead portions 160 thereby define a hollow, annular space 105.

A reinforced annular shear band 2 is disposed radially inward of tread portion 110. The annular band 2 includes a composite of two shear layers 10, 20. Although only two layers 10, 20 are shown, it should be understood that more layers may be used. The annular band 2 may further include a first membrane 130 having two reinforced layers 131, 132 adhered to a radially innermost extent of the shear layer 10, and a second membrane 140 having reinforced layers 141 and 142 that are adhered to a radially outermost extent of the shear layer 20.

The tread portion 110 may have no grooves or may have a plurality of longitudinally oriented tread grooves 115 forming essentially longitudinal tread ribs 116 therebetween. Ribs 116 may be further divided transversely or longitudinally to form a tread pattern adapted to the usage requirements of a particular vehicle and/or weather application. The tread grooves 115 may have a depth consistent with the intended use and/or conditions of the tire 100. The second membrane 140 may be radially offset inward from a bottom of the tread grooves 115 a sufficient distance to protect the structure of the second membrane from cuts and small penetrations of the tread portion 110. The offset distance may be increased or decreased depending on the intended use and/or conditions of the tire 100. For example, a heavy truck tire may use an offset distance of from 5.0 mm to 7.0 mm.

Each of the layers 131, 132, 141, 142 of the first and second membranes 130, 140 preferably include effectively inextensible cord reinforcements embedded within an elastomeric coating. Preferably, the membranes 130, 140 are adhered to the shear layers 10, 20 by vulcanization of the materials. The membranes 130, 140 may also be adhered to shear layers 10, 20 by any suitable method of chemical and/or adhesive bonding or mechanical fixation. Each of the shear layers 10, 20 may be constructed from a variety of materials, such as rubber, polyurethane, and/or thermoplastic elastomers. The materials may be adhered to each other by any suitable method of bonding or mechanical fixation.

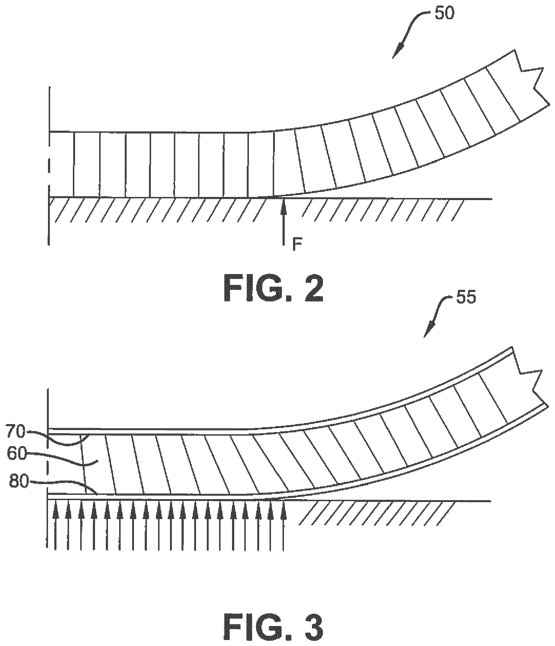

FIG. 2 illustrates an example rigid annular shear band 50 constructed of a homogeneous material (e.g., a metallic ring) that does not allow for only minimal shear deformation under load. The pressure distribution satisfying the equilibrium force and bending moment requirements may be a pair of concentrated forces F located at each end of the contact area, one end of which is shown in FIG. 2.

By contrast, FIG. 3 illustrates an example shear band 55 having a single shear layer 60, a radially inner reinforcement membrane 70, and a radially outer reinforcement membrane 80. The structure 55 of FIG. 3 may thus limit shear deformation within the shear layer 60, resulting in a desirable pressure distribution Q in the ground contact region that is substantially uniform. Specifically, when the ratio of the effective tensile modulus of the membranes 70, 80 to the dynamic shear modulus G of the shear layer 60 is sufficiently high (e.g., 100 to 1), shear deformation of the shear band 55 under load may be deformation of the shear layer 60 with little longitudinal extension or compression by the membranes 70, 80, which results in the substantially uniform ground contact pressure distribution Q. When the shear band 55 deforms by shear deformation in the shear layer 60, an advantageous relation may be created allowing one to specify the values of the dynamic shear modulus G of layer 60 and its thickness h for a given application:

$$P_{eff} * R = G * h \qquad (1)$$

where:

$P_{eff}$ = predetermined ground contact pressure;
G = dynamic shear modulus of layer 60;
h = thickness of shear layer 60; and
R = radial position of the outer membrane 80

$P_{eff}$ and R are design parameters chosen according to the intended use and/or conditions of the tire 100. The above equation then suggests that the product of the dynamic shear modulus G of the shear layer times the radial thickness of shear layer 60 is approximately equal to a product of a predetermined ground contact pressure times a radial position of the outermost extent of the outer membrane 80.

A shear layer that has a desirable $P_{eff}$, a lower thickness h, and a lower rolling resistance RR may be achieved by constructing the shear layer 60 as a composite of different layers made from materials that each have certain individual physical properties. The physical properties of the composite of individual materials may exhibit desired physical properties and an improvement in rolling resistance at a desired thickness of h not possible with only a single shear layer constructed of a single, individual material (FIG. 2).

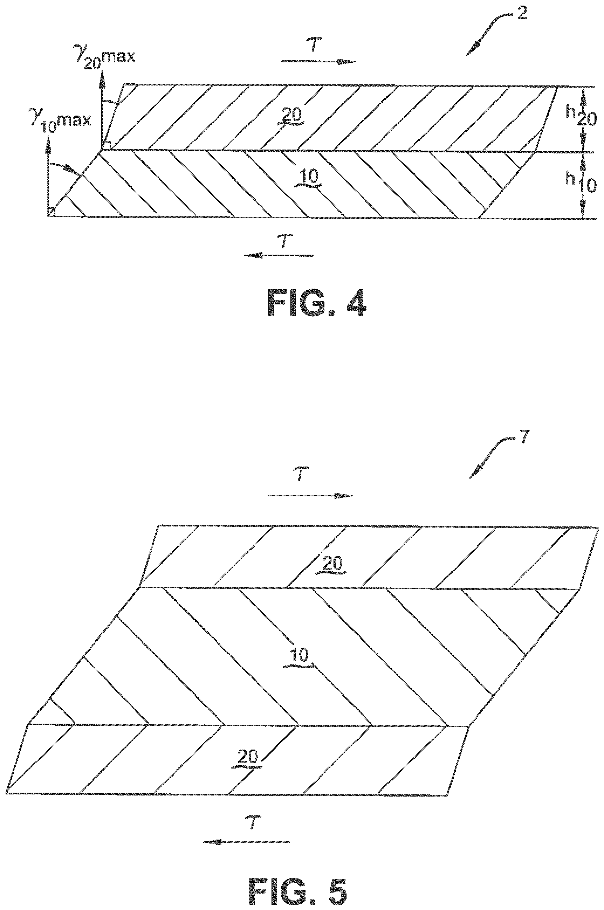

Referring to FIG. 4, the example shear band 2 of FIG. 1 is constructed from two different shear layers 10, 20. The first layer 10 has a dynamic shear modulus $G_{10}$ and the second layer 20 may has a dynamic shear modulus of $G_{20}$. In FIG. 4, for purposes of discussion, the shear layers 10, 20 are depicted under shear stress $\tau$ resulting in a strain in each of the layers. As shown in FIG. 4, each layer 10, 20 is depicted as experiencing a maximum shear strain resulting in maximum shear angles of $\gamma_{10max}$ and $\gamma_{20max}$, respectively. A shear band 2 constructed from the combined shear layers 10, 20 may thus be engineered, through a selection of materials, to exhibit a lower rolling resistance RR and more advantageous physical properties than a non-composite, single layer shear band 50 (FIG. 2).

Relative to the second layer 20, the first layer 10 is preferably constructed from a softer material with a relatively lower dynamic shear modulus $G_{10}$ that may exhibit low hysteresis even though this material 10 may operate at a relatively higher strain than the second layer 20 for a given shear stress $\tau$.

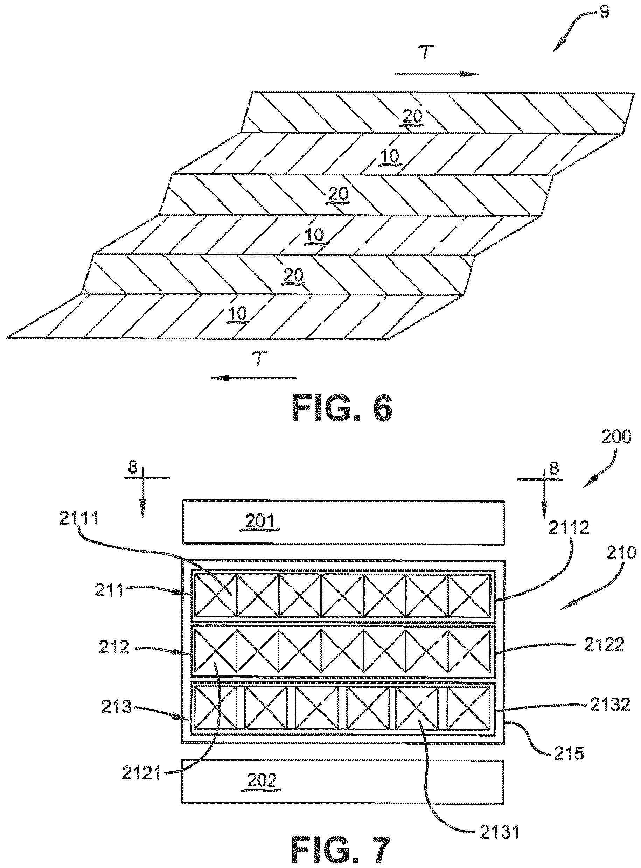

These example shear bands 50, 55 preferably include more than two layers, as shown in FIG. 5. An example shear band 7 is constructed from multiple alternating layers 10, 20 of materials having a dynamic shear modulus of either $G_{10}$ or $G_{20}$. Accordingly, FIG. 5 illustrates another example shear band 7 in which the volume fraction of $G_{10}$ and $G_{20}$ may be equal. However, the shear band 7 may be constructed from three layers 10, 20. Two layers 20 having a relatively higher dynamic shear modulus $G_{20}$ may be positioned radially inward and radially outward of a relatively softer layer 10 with a lower dynamic shear modulus $G_{10}$. FIG. 6 illustrates yet another example shear band 9 where multiple alternating layers 10, 20 of selected materials each have a dynamic shear modulus of $G_{10}$ or $G_{20}$.

One current goal in the world-wide tire industry is replacement of existing pneumatic tires with non-pneumatic tires that are lightweight, durable, and require no maintenance. Pneumatic tires have most of the characteristics that make the pneumatic tires so dominant today, such as efficiency at high loads, low contact pressure, low wear, low stiffness, etc. However, a challenge with a pneumatic tire is the requirement for a compressed fluid, rendering it inoperable after a significant loss of inflation pressure. Therefore, an improved non-pneumatic tire is desired that combines the desirable features of pneumatic tires without the need for compressed fluid.

Conventional non-pneumatic tires include a composite structure with three main parts: a rigid (steel) hub, thin deformable spokes, and a shear band. When loaded, the shear band deforms in the contact region and expands in the outer edge (to account for inextensibility of the shear band) that tensions the spokes not in the contact region to carry the load. Thus, from a structural point of view, a shear band may be flexible enough to conform with the loaded shape, as well as durable enough to survive the complex loading (tension, compression, bending or combination of all three) while under load. Further, a lightweight structure with low hysteretic materials may improve fuel economy and rolling resistance.

In accordance with the present invention, a lightweight durable shear belt package 200 is a multi-ply laminated belt package to provide durability and structural integrity. It includes an enclosed three-dimensional fabric spacer structure. A shear band structure 210 is radially interposed between a radially outer first belt layer 201 such as a metal belt of the belt package 200 and a radially inner second belt layer 202 such as a metal belt of the belt package 200. Unlike conventional shear band designs with metal wire treatments, a fabric reinforced ply structure may be used as shear band structure 210. The radially adjacent fabric reinforced plies 211, 212, 213 may be placed both at a various angled orientations and/or at 0-degree orientations with reference to the equatorial plane of the tire 100, similar to a conventional angle-ply structure.

This allows to enhance stiffness of the shear band 210 in both the circumferential and axial directions of the tire 100. Enclosing the three-dimensional fabric with ply structures 2110, 2120, 2130 further enhances the structural integrity of the shear band structure 210. A shear band structure or coupon 210 in accordance with the present invention may be fabricated by enclosing the 3D fabric spacer layers 2111, 2121, 2131 with angled fabric layers 2112, 2122, 2132, orienting the ply and fabric/spacer layers 2111, 2112, 2121, 2122, 2131, 2132, enclosing the entire structure 210 with another angled fabric layer 215, and curing the shear band coupon 210. Such a cured shear band coupon 210 demonstrates flexibility to address the bending and compression forces, structural integrity of the shear band coupon, and stiffness of the shear band coupon both in the circumferential and axial directions.

The shear band coupon 210 may be further tuned to meet the application requirements by varying design parameters, such as varying materials of the fabric/spacer layers 2111, 2112, 2121, 2122, 2131, 2132 and/or surrounding structures 201, 202, such as aramid, nylon, polyester, steel, aluminum, carbon, etc., varying densities and/or mechanical structure of the fabric/spacer layers 2111, 2112, 2121, 2122, 2131, 2132, varying the width of the shear band coupon 210, varying the number of shear band coupons 210, varying widths of multiple shear band layers 2111, 2112, 2121, 2122, 2131, 2132, varying angles of the multiple layers and enclosures 2111, 2112, 2121, 2122, 2131, 2132, varying the sequence of the multiple layers and enclosures, etc. Examples of various suitable fabric spacers are disclosed in US 10,071,603.

FIG. 7 shows an example shear belt package 200 in accordance with the present invention. The belt package 200 includes a radially outer first belt layer 201, a radially inner second belt layer 202, and a shear band structure or coupon 210 disposed radially therebetween. The shear band coupon 210 includes a first reinforced ply 211 disposed radially inside the first belt layer 201, a second reinforced ply 212 disposed radially inside the first reinforced ply 211, a third reinforced ply 213 disposed radially inside the second belt layer 202, and a further fabric layer 215 enclosing all three reinforced plies 211, 212, 213. The further fabric layer 215 is preferably reinforced with cords angled between -45 degrees and +45 degrees cords, or between -45 degrees and -35 degrees, or between -5 degrees and +5 degrees, or between +35 degrees and +45 degrees relative to the equatorial plane EP of the tire 100.

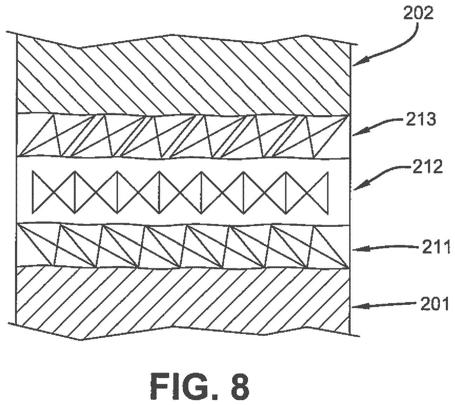

Preferably, the first reinforced ply 211 includes a three dimensional fabric spacer layer 2111 enclosed by an angled fabric layer 2112. The example three dimensional fabric spacer layer 2111 is angled between -45 degrees and +45 degrees, or between -45 degrees and -35 degrees (FIG. 8), or between -5 degrees and +5 degrees, or between +35 degrees and +45 degrees relative to the equatorial plane EP of the tire 100. The angled fabric layer 2112 is preferably reinforced with cords angled between -45 degrees and +45 degrees, or between -45 degrees and -35 degrees, or between -5 degrees and +5 degrees, or between +35 degrees and +45 degrees relative to the equatorial plane EP of the tire 100.

Preferably, the second reinforced ply 212 includes a three dimensional fabric spacer layer 2121 enclosed by an angled fabric layer 2122. The example three dimensional fabric spacer layer 2121 is angled between -45 degrees and +45 degrees, or between -45 degrees and -35 degrees, or between -5 degrees and +5 degrees (FIG. 8), or between +35 degrees and +45 degrees relative to the equatorial plane EP of the tire 100. The angled fabric layer 2122 is preferably reinforced with cords angled between -45 degrees and +45 degrees, or between -45 degrees and -35 degrees, or between -5 degrees and +5 degrees, or between +35 degrees and +45 degrees relative to the equatorial plane EP of the tire 100.

Preferably, the third reinforced ply 213 includes a three dimensional fabric spacer layer 2131 enclosed by an angled fabric layer 2132. The example three dimensional fabric spacer layer 2131 is angled between -45 degrees and +45 degrees, or between -45 degrees and -35 degrees, or between -5 degrees and +5 degrees, or between +35 degrees and +45 degrees (FIG. 8) relative to the equatorial plane EP of the tire 100. The angled fabric layer 2132 is preferably reinforced with cords angled between -45 degrees and +45 degrees, or between -45 degrees and -35 degrees, or between -5 degrees and +5 degrees, or between +35 degrees and +45 degrees relative to the equatorial plane EP of the tire 100.

The shear band coupon 210 may have more reinforced plies, similar to the plies 211, 212, 213, angled between -45 degrees and +45 degrees, or between -45 degrees and -35 degrees, or between -5 degrees and +5 degrees, or between +35 degrees and +45 degrees relative to the equatorial plane EP of the tire 100, again similar to the plies 211, 212, 213.

## Claims

1. A shear belt package for a tire, the shear belt package (200) comprising:

   a first belt layer (201) for extending circumferentially around the tire (100);
   a second belt layer (202) for extending circumferentially around the tire (100); and
   a shear band structure (210) radially interposed between the first belt layer (201) and the second belt layer (202), the shear band structure (210) including a first reinforcing ply (211) radially adjacent the first belt layer (201), a third reinforcing ply (213) radially adjacent the second belt layer (202), and a second reinforcing ply (212) radially interposed between the first reinforcing ply (211) and the third reinforcing ply (213);
   **characterized in that**
   the first reinforcing ply (211) includes a first three dimensional layer (2111) enclosed by a first fabric layer (2112), the second reinforcing ply (212) includes a second three dimensional layer (2121) enclosed by a second fabric layer (2122) and the third reinforcing ply (213) includes a third three dimensional layer (2131) enclosed by a third fabric layer (2132), and wherein a further fabric layer (215) encloses all of the three dimensional layers (2111, 2121, 2131).

2. The shear belt package (200) of claim 1 wherein the first reinforcing ply (211) includes the first three dimensional layer (2111) enclosed by the first fabric layer (2112), wherein the second reinforcing ply (212) includes the second three dimensional layer (2121) enclosed by the second fabric layer (2122) wherein the third reinforcing ply (213) includes the third three dimensional layer (2131) enclosed by the third fabric layer (2132).

3. The shear belt package (200) as set forth in claim 1 or 2 wherein the first three dimensional layer (2111) includes a structure angled in a range of from -45 degrees to -35 degrees or from +45 degrees to +35 degrees relative to the equatorial plane of the tire (100).

4. The shear belt package (200) as set forth in at least one of the previous claims wherein the second three dimensional layer (2121) includes a structure angled in a range of from -5 degrees to +5 degrees relative to the equatorial plane of the tire (100).

5. The shear belt package (200) as set forth in at least one of the previous claims wherein the third three dimensional layer (2131) includes a structure angled in a range of from +35 degrees to +45 degrees or from -35 degrees to -45 degrees relative to the equatorial plane of the tire (100).

6. The shear belt package (200) as set forth in at least one of the previous claims wherein the first fabric layer (2112) includes cords, preferably metal cords, angled in a range of from +35 degrees to +45 degrees or from -35 degrees to -45 degrees relative to the equatorial plane of the tire (100) and/or wherein third fabric layer (2132) includes cords, preferably metal cords, angled in a range of from -35 degrees to -45 degrees or from +35 degrees to +45 degrees relative to the equatorial plane of the tire (100).

7. The shear belt package (200) as set forth in at least one of the previous claims wherein the second fabric layer (2122) includes cords, preferably metal cords, angled in a range of from -5 degrees to +5 degrees relative to the equatorial plane of the tire (100).

8. The shear belt package (200) as set forth in at least one of the previous claims wherein the first belt layer (201) and/or the second belt layer (202) include cords, preferably metal cords, angled in a range of from -5 degrees to +5 degrees relative to the equatorial plane of the tire (100).

9. A tire comprising a shear belt package (200) in accordance with at least one of the previous claims.

10. The tire of claim 9 wherein the tire is a pneumatic tire.

11. The tire of claim 9 wherein the tire is a non-pneumatic tire.

12. A method for constructing a shear belt package (200), the method comprising the steps of:

enclosing spacer layers (2111, 2121, 2131) with angled fabric layers (2112, 2122, 2132); orienting the spacer layers (2111, 2121, 2131) and angled fabric layers (2112, 2122, 2132) relative to an equatorial plane; **characterized in that** the method further comprises the steps of:

enclosing all of the spacer layers (2111, 2121, 2131) with an overall angled fabric layer (215) to form a shear band coupon or shear band structure (210); orienting the shear band coupon or shear band structure (210) radially between a first belt layer (201) and a second belt layer (202); and curing the first belt layer (201), the shear band coupon or shear band structure (210) and the second belt layer (202) to form the shear belt package (200).

13. The method of claim 12 wherein the shear belt package (200) is a shear belt package (200) for a tire (100) in accordance with at least one of the claims 1 to 9.

**Patentansprüche**

1. Schergürtelpaket für einen Reifen, wobei das Schergürtelpaket (200) umfasst:

eine erste Gürtelschicht (201) zum umlaufenden Erstrecken um den Reifen (100); eine zweite Gürtelschicht (202) zum umlaufenden Erstrecken um den Reifen (100) und eine Scherbandstruktur (210), die radial zwischen der ersten Gürtelschicht (201) und der zweiten Gürtelschicht (202) angeordnet ist, wobei die Scherbandstruktur (210) eine erste radial an die erste Gürtelschicht (201) angrenzende Verstärkungslage (211), eine dritte radial an die zweite Gürtelschicht (202) angrenzende Verstärkungslage (213) und eine zweite radial zwischen der ersten Verstärkungslage (211) und der dritten Verstärkungslage (213) eingefügte Verstärkungslage (212) umfasst; **dadurch gekennzeichnet, dass** die erste Verstärkungslage (211) eine erste von einer ersten Gewebeschicht (2112) umschlossene dreidimensionale Schicht (2111) enthält, die zweite Verstärkungslage (212) eine zweite, von einer zweiten Gewebeschicht (2122) umschlossene dreidimensionale Schicht (2121) enthält und die dritte Verstärkungslage (213) eine von einer dritten Gewebeschicht (2132) umschlossene dreidimensionale Schicht (2131) enthält, und wobei eine weitere Gewebeschicht (215) alle dreidimensionalen Schichten (2111, 2121, 2131) umschließt.

2. Schergürtelpaket (200) nach Anspruch 1, wobei die erste Verstärkungslage (211) die erste dreidimensionale Schicht (2111) umfasst, die von der ersten Gewebeschicht (2112) umschlossen ist, wobei die zweite Verstärkungslage (212) die zweite dreidimensionale Schicht (2121) umfasst, die von der zweiten Gewebeschicht (2122) umschlossen ist, wobei die dritte Verstärkungslage (213) die dritte dreidimensionale Schicht (2131) umfasst, die von der dritten Gewebeschicht (2132) umschlossen ist.

3. Schergürtelpaket (200) nach Anspruch 1 oder 2, wobei die erste dreidimensionale Schicht (2111) eine Struktur umfasst, die in einem Bereich von -45 Grad bis 35 Grad oder von +45 Grad bis +35 Grad relativ zur äquatorialen Ebene des Reifens (100) abgewinkelt ist.

**4.** Schergürtelpaket (200) nach mindestens einem der vorhergehenden Ansprüche, wobei die zweite dreidimensionale Schicht (2121) eine Struktur umfasst, die in einem Bereich von -5 Grad bis +5 Grad relativ zur äquatorialen Ebene des Reifens (100) abgewinkelt ist.

**5.** Schergürtelpaket (200) nach mindestens einem der vorhergehenden Ansprüche, wobei die dritte dreidimensionale Schicht (2131) eine Struktur umfasst, die in einem Bereich von +35 Grad bis +45 Grad oder von -35 Grad bis -45 Grad relativ zur Äquatorebene des Reifens abgewinkelt ist (100).

**6.** Schergürtelpaket (200) nach mindestens einem der vorhergehenden Ansprüche, wobei die erste Gewebeschicht (2112) Korde, vorzugsweise Metallkorde, enthält, die in einem Bereich von +35 Grad bis +45 Grad oder von35 Grad bis -45 Grad relativ zur äquatorialen Ebene des Reifens (100) abgewinkelt sind und/oder wobei die dritte Gewebeschicht (2132) Korde, vorzugsweise Metallkorde, enthält, die in einem Bereich von35 Grad bis -45 Grad oder von +35 Grad bis +45 Grad relativ zur Äquatorebene des Reifens (100) abgewinkelt sind.

**7.** Schergürtelpaket (200) nach mindestens einem der vorhergehenden Ansprüche, wobei die zweite Gewebeschicht (2122) Korde, vorzugsweise Metallkorde, umfasst, die in einem Bereich von -5 Grad bis +5 Grad relativ zur äquatorialen Ebene des Reifens (100) abgewinkelt sind.

**8.** Schergürtelpaket (200) nach mindestens einem der vorhergehenden Ansprüche, wobei die erste Gürtelschicht (201) und/oder die zweite Gürtelschicht (202) Korde, vorzugsweise Metallkorde, enthalten, die in einem Bereich von -5 Grad bis +5 Grad relativ zur Äquatorebene des Reifens abgewinkelt sind (100).

**9.** Reifen, der ein Scherbandpaket (200) gemäß mindestens einem der vorhergehenden Ansprüche umfasst.

**10.** Reifen nach Anspruch 9, wobei der Reifen ein Luftreifen ist.

**11.** Reifen nach Anspruch 9, wobei der Reifen ein nichtpneumatischer Reifen ist.

**12.** Verfahren zum Aufbau eines Schergürtelpakets (200), wobei das Verfahren die Schritte:

der Umschließung von Abstandsschichten (2111, 2121, 2131) mit abgewinkelten Gewebeschichten (2112, 2122, 2132);
des Ausrichtens der Abstandsschichten (2111, 2121, 2131) und abgewinkelten Gewebeschichten (2112, 2122, 2132) relativ zu einer äquatorialen Ebene umfasst; **dadurch gekennzeichnet, dass** das Verfahren ferner die Schritte:

der Umschließung aller Abstandsschichten (2111, 2121, 2131) mit einer insgesamt abgewinkelten Gewebeschicht (215) zur Bildung eines Scherbandcoupons oder einer Scherbandstruktur (210);
des Ausrichtens des Scherbandcoupons oder der Scherbandstruktur (210) radial zwischen einer ersten Gürtelschicht (201) und einer zweiten Gürtelchicht (202); und
der Vulkanisierung der ersten Gürtelschicht (201), des Scherbandcoupons oder der Scherbandstruktur (210) und der zweiten Gürtelschicht (202) zur Bildung des Scherbandpakets (200) umfasst.

**13.** Verfahren nach Anspruch 12, wobei das Schergürtelpaket (200) ein Schergürtelpaket (200) für einen Reifen (100) gemäß mindestens einem der Ansprüche 1 bis 9 ist.

## Revendications

**1.** Paquet de ceintures de cisaillement pour un bandage, le paquet de ceintures de cisaillement (200) comprenant :

une première couche de ceinture (201) destinée à s'étendre dans la direction circonférentielle autour du bandage (100) ;
une deuxième couche de ceinture (202) destinée à s'étendre dans la direction circonférentielle autour du bandage (100) ; et
une structure de bande de cisaillement (210) qui vient s'intercaler dans la direction radiale entre la première couche de ceinture (201) et la deuxième couche de ceinture (202), la structure de bande de cisaillement (210) englobant une première nappe de renforcement (211) dans la direction radiale en position adjacente à la première couche de ceinture (201), une troisième nappe de renforcement (213) dans la direction radiale en position adjacente à la deuxième couche de ceinture (202), et une deuxième nappe de renforcement (212) qui vient s'intercaler dans la direction radiale entre la première couche de ceinture (201) et la troisième nappe de renforcement (213) ;
**caractérisé en ce que**
la première nappe de renforcement (211) englobe une première couche tridimensionnelle (2111) entourée par une première couche de tissu (2112), la deuxième nappe de renforcement (211) englobe une deuxième couche tridimensionnelle (2121) entourée par une deuxième couche de tissu (2122) et la troisième nappe de renforcement (213) englobe une troisième couche tridimensionnelle (2132) entourée par une troisième couche de tissu (2132), et dans lequel une couche de tissu supplémentaire (215) entoure la totalité des couches tridimensionnelles (2111, 2121, 2132).

2. Paquet de ceintures de cisaillement (200) selon la revendication 1, dans lequel la première nappe de renforcement (211) englobe la première couche tridimensionnelle (2111) qu'entoure la première couche de tissu (2112) ; dans lequel la deuxième nappe de renforcement (212) englobe la deuxième couche tridimensionnelle (2121) qu'entoure la deuxième couche de tissu (2122) ; dans lequel la troisième nappe de renforcement (213) englobe la troisième couche tridimensionnelle (2131) qu'entoure la troisième couche de tissu (2132).

3. Paquet de ceintures de cisaillement (200) tel qu'indiqué dans la revendication 1 ou 2, dans lequel la première couche tridimensionnelle (2111) englobe une structure qui forme un angle dans une plage allant de -45 degrés à -35 degrés ou de +45 degrés à +35 degrés par rapport au plan équatorial du bandage (100).

4. Paquet de ceintures de cisaillement (200) tel qu'indiqué dans au moins une des revendications précédentes, dans lequel la deuxième couche tridimensionnelle (2121) englobe une structure qui forme un angle dans une plage allant de -5 degrés à +5 degrés par rapport au plan équatorial du bandage (100).

5. Paquet de ceintures de cisaillement (200) tel qu'indiqué dans au moins une des revendications précédentes, dans lequel la troisième couche tridimensionnelle (2131) englobe une structure qui forme un angle dans une plage allant de +35 degrés à +45 degrés ou de -35 degrés à -45 degrés par rapport au plan équatorial du bandage (100).

6. Paquet de ceintures de cisaillement (200) tel qu'indiqué dans au moins une des revendications précédentes, dans lequel la première couche de tissu (2112) englobe des câblés, de préférence des câblés métalliques, qui forment un angle dans une plage allant de +35 degrés à +45 degrés ou de -35 degrés à -45 degrés par rapport au plan équatorial du bandage (100) et/ou dans lequel la troisième couche de tissu (2132) englobe des câblés, de préférence des câblés métalliques, qui forment un angle dans une plage allant de -35 degrés à -45 degrés ou de +35 degrés à +45 degrés par rapport au plan équatorial du bandage (100).

7. Paquet de ceintures de cisaillement (200) tel qu'indiqué dans au moins une des revendications précédentes, dans lequel la deuxième couche de tissu (2122) englobe des câblés, de préférence des câblés métalliques, qui forment un angle dans une plage allant de -5 degrés à +5 degrés par rapport au plan équatorial du bandage (100).

8. Paquet de ceintures de cisaillement (200) tel qu'indiqué dans au moins une des revendications précédentes, dans lequel la première couche de ceinture (201) et/ou la deuxième couche de ceinture (202) englobe(nt) des câblés, de préférence des câblés métalliques, qui forment un angle dans une plage allant de -5 degrés à +5 degrés par rapport au plan équatorial du bandage (100).

9. Bandage qui comprend un paquet de ceintures de cisaillement (200) en conformité avec au moins une des revendications précédentes.

10. Bandage selon la revendication 9, dans lequel le bandage est un bandage pneumatique.

11. Bandage selon la revendication 9, dans lequel le bandage est un bandage non-pneumatique.

12. Procédé destiné à la confection d'un paquet de ceintures de cisaillement (200), le procédé comprenant les étapes dans lesquelles :

on entoure des couches d'écartement (2111, 2121, 2131) de couches de tissu formant un angle (2112, 2122, 2132) ;
on oriente les couches d'écartement (2111, 2121, 2131) et les couches de tissu formant un angle (2112, 2122, 2132) par rapport à un plan équatorial ; **caractérisé en ce que** le procédé comprend en outre les étapes dans lesquelles :

on entoure toutes les couches d'écartement (2111, 2121, 2131) d'une couche de tissu globale formant un angle (215) afin d'obtenir un coupon de bande de cisaillement ou une structure de bande de cisaillement (210) ;
on oriente le coupon de bande cisaillement ou la structure de bande de cisaillement (210) en direction radiale entre une première couche de ceinture (201) et une deuxième couche de ceinture (202) ; et
on vulcanise la première couche de ceinture (201), le coupon de bande de cisaillement ou la structure de bande cisaillement (210) et la deuxième couche de ceinture (202) afin d'obtenir le paquet de ceintures de cisaillement (200).

13. Procédé selon la revendication 12, dans lequel le paquet de ceintures de cisaillement (200) est un paquet de ceintures de cisaillement (200) pour un bandage (100) en conformité avec au moins une des revendications 1 à 9.

## FIG. 1

**FIG. 2**

**FIG. 3**

**FIG. 4**

**FIG. 5**

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3238957 A1

- US 10071603 B